# EUROPÄISCHE PATENTSCHRIFT

(11) **EP 0 796 477 B1**
(45) Veröffentlichungstag und Bekanntmachung des Hinweises auf die Patenterteilung: **14.10.1998**
(21) Anmeldenummer: 95939210.1
(22) Anmeldetag: 23.11.1995
(51) Int. Cl.: G06K 19/077, G06K 19/07

(54) **FOLIENAUSFÜHRUNG FÜR DIE MONTAGE VON CHIPKARTEN MIT SPULEN**
FOIL DESIGN FOR MOUNTING SMART CARDS WITH COILS
MODE DE REALISATION DE CARTES A PUCES ET A BOBINES CONSTITUEES DE PELLICULES ASSEMBLABLES

(30) Priorität: 11.12.1994 DE 4443980
(43) Veröffentlichungstag der Anmeldung: 24.09.1997
(73) Patentinhaber: Angewandte Digital Elektronik GmbH, 21521 Dassendorf (DE)
(72) Erfinder: KREFT, Hans-Diedrich, D-21521 Dassendorf (DE)
(74) Vertreter: Mierswa, Klaus, Dipl.-Ing.
(86) Internationale Anmeldenummer: DE9501677
(87) Internationale Veröffentlichungsnummer: WO9618974

(56) Entgegenhaltungen:
- EP-A- 0 595 549
- DE-A- 4 105 869
- PATENT ABSTRACTS OF JAPAN vol. 95, no. 3, 28.April 1995 & JP,A,06 336096 (OMRON CORP.), 6.Dezember 1994,
- PATENT ABSTRACTS OF JAPAN vol. 12, no. 144 (P-697), 6.Mai 1988 & JP,A,62 264353 (CASIO COMP. CO. LTD), 17.November 1987,

## Beschreibung

### Technisches Gebiet:

Die Erfindung betrifft Chipkarten mit einem Chipträgerelement mit mindestens einem Chip und einem Spulenträgerelement mit mindestens einer Spule zur kontaktfreien Übertragung von Energie und Daten zu einem Kartenendgerät sowie Verfahren zur Herstellung derartiger Chipkarten.

### Stand der Technik:

Durch die DE 3935364 C1 sind Chipkarten (Kombinationschipkarten, Hybridkarten) bekannt geworden, welche sowohl kontaktfrei als auch kontaktbehaftet mit ihren Endgeräten (Schreib/Lesegeräten) Energie und Daten austauschen können. Diese Karten können für vielfache Anwendungen, wie beispielsweise Telefonkarten, Gesundheitskarten, Zutrittskontrollkarten eingesetzt werden. Diese Karten können für vielfache Anwendungen wie beispielsweise Telefonkarten, Gesundheitskarten, Zutrittskontrollkarten eingesetzt werden.

Nach dem Stand der Technik werden kontaktfrei arbeitende Chipkarten hergestellt, indem ein Chip fest mit dem Spulenträgerelement verbunden wird und anschließend beim Kartenhersteller als komplettes Bauelement in das Plastikmaterial einer Karte eingebetten wird. Dies hat den Nachteil, dass recht große und mechanisch anfällige Bauteile (Chip + Folie mit Spule) zum Kartenhersteller transportiert werden müssen. Außerdem können keine Kartenkörper beim Kartenhersteller vorgefertigt werden, da das Bauteil, welches Chip und Folie mit Spule enthält, vor dem Herstellen einer Karte (z.B. Karte mit Aufdruck) in den Kartenkörper eingebracht sein muß.

Durch die DE 41 05 869 A1 ist eine IC- Karte und ein Verfahren zu ihrer Herstellung bekannt geworden, bei dem auf einer IC-Karte bzw. auf einem Träger des Halbleiterchips Leiterbahnnetz, Induktionsspulen und Kontaktflächen kreuzungsfrei auf einer Seite angeordnet sind. Antennenbahnen sind durch Leiterbahnen auf einer flexiblen Folie gebildet ebenso wie die extern zugänglichen Kontakte auf dieser Folie realisiert sind. Die IC-Chips sind auf dem Träger angeordnet und jeweils von einem Versteifungsring umgeben. Der Chip selbst ist über Bonddrähte mit den Kontakten auf der Folie verbunden.

Durch die EP 0 595 549 A2 ist es bekannt, einen Chip mit einer spulenförmigen Leiterbahnstruktur auf einer Folie elektrisch und Mechanisch zu verbinden, indem auf Kontaktstellen ein elektrisch leitender Klebstoff aufgebracht wird. Beim Zusammenbringen des Chips mit der Folie werden die auf der Oberfläche des Chips befindlichen Kontakte elektrisch mit den Leiterbahnen verbunden.

### Technische Aufgabe:

Der Erfindung liegt die Aufgabe zugrunde, die Montage von Chipkarten mit ihren unterschiedlichen elektronischen Funktionselementen in einfacher Weise zu gestalten sowie einerseits Kartenkörper unabhängig von der Chipmontage produzieren und andererseits Chips hinter den Kontaktflächen montieren und wie bei reinen Kontaktkarten serienmäßig herstellen zu können und die beiden Module, nämlich Chipträgerelement und Spulenträgerelement, einschließlich ihrer späteren leitenden Verbindung separat prüfbar zu machen.

### Offenbarung der Erfindung und deren Vorteile:

Die Lösung der Aufgabe besteht erfindungsgemäß bei einer Chipkarte enthaltend die beiden Teile Chipträgerelement A und Spulenträgerelement B, wobei das Chipträgerelement A aus einem Kontaktflächenträgerelement besteht, welches elektrisch mit mindestens einem elektronischen Chip verbunden ist und von außen zugängliche Kontaktflächen als Kartenkontakte aufweist zur Verbindung des Chips mit Kontakten in einem Kartenendgerät, wobei der Chip auf der den Kontaktflächen abgewandten Seite des Chipträgerelements A angeordnet ist und das Spulenträgerelement B, aus einer Trägerfolie besteht, welche eine oder mehrere Spulen trägt zur kontaktfreien Übertragung von Energie und Daten zu dem Kartenendgerät, darin, dass am Kontaktflächenträgerelement auf der dem Spulenträgerelement B zugewandten Seite zusätzlich elektrisch leitende Materialien haftend angebracht sind und elektrisch leitend mit dem Chip verbunden sind, auf der Trägerfolie an den Stellen elektrisch leitende und mit den Spulen verbundene Flächen vorhanden sind, an denen gegenüber auf dem Kontaktflächenträgerelement die elektrisch leitenden Materialien sitzen, so dass das mit dem Spulenträgerelement B zusammengebrachte Chipträgerelement A mittels der elektrisch leitenden Materialien eine elektrische Verbindung zwischen den Spulen und dem Chip des Chipträgerelements A herstellt, womit die Chipkarte sowohl als kontaktfreie Karte mit Hilfe der Spulenverbindungen wie wahlweise als kontaktbehaftete Karte mit Hilfe der Kontakte zu arbeiten imstande ist.

Mit den Merkmalen der unabhängigen Patentansprüche wird auch die Aufgabe gelöst, Chipkarten, welche keine Kontaktelemente enthalten, ohne zusätzlichen Prozeßschritt mit ihren Funktionselementen Chip und Spulen elektrisch zu verbinden. Bei einer derartigen Chipkarte, enthaltend die beiden Teile Chipträgerelement A und Spulenträgerelement B, ist das Chipträgerelement A elektrisch mit mindestens einem elektronischen Chip verbunden und das Spulenträgerelement B besteht aus einer Trägerfolie, welche eine oder mehrere Spulen trägt zur kontaktfreien Übertragung von Energie und Daten zu einem Kartenendgerät, wobei der Chip auf der dem Spulenträgerelement B zugewandten Seite des Chipträgerelements A angeordnet ist, am Chipträgerelement A auf der dem Spulenträgerelement B zugewandten Seite zusätzlich elektrisch leitende Materialien haftend angebracht und elektrisch leitend mit dem Chip verbunden sind, und auf der Trägerfolie an den Stellen elektrisch leitende und mit den Spulen verbundene Flächen vorhanden sind, an denen gegenüber auf dem Chipträgerelement A die elektrisch leitenden Materialien sitzen, so dass das mit dem Spulenträgerelement B zusammengebrachte Chipträgerelement A mittels der elektrisch leitenden Materialien eine elektrische Verbindung zwischen den Spulen und dem Chip herstellt, womit die Chipkarte als kontaktfreie Karte mit Hilfe der Spulenverbindungen zu arbeiten imstande ist.

Es ist möglich, die beiden wesentlichen Teile Chipträgerelement A und Spulenträgerelement B zeitlich unabhängig voneinander herzustellen und anschließend in einem Arbeitsgang zusammenzufügen. Bei diesem Verfahren ist es möglich, Chipkarten mit ihrem Plastikteil in Mengen für Versuchszwecke, z.B. mit grafischer Gestaltung, Bedruckung, unabhängig vom Einbringen der teuren Chips herzustellen. Ferner wird das Anbringen der Chips hinter den Kontaktflächen in der gleichen Weise ermöglicht, wie es auch bei reinen Kontaktchipkarten, welche keine Spulen enthalten, nach dem Stand der Technik der Fall ist.

Erfindungsgemäß ist dieses Verfahren ist ein solches zur Herstellung von Chipkarten gemäß Anspruch 8.

Die Erfindung ermöglicht es, Chipkarten mit ihrem Plastikteil in Mengen für Versuchszwecke, zum Beispiel mit grafischer Gestaltung, wie Bedruckung, unabhängig vom Einbringen der teuren Chips herzustellen. Ferner wird das Anbringen der Chips hinter den Kontaktflächen in der gleichen Weise ermöglicht, wie es auch bei reinen Kontaktchipkarten, welche keine Spulen enthalten, der Fall ist. Die beiden wesentlichen Teile, nämlich Chipträgerelement Teil A und Spulenträgerelement Teil B, können verfahrensmäßig zeitlich unabhängig voneinander hergestellt und anschließend in einem Arbeitsgang zusammengefügt werden.

Danach ist es möglich, Kartenkörper, d.h. Plastikmaterialien, unabhängig von der Chipmontage zu produzieren und Andrucke und Herstellung der Karten ohne Einbringung der Chips zu testen. Außerdem ist es möglich, Chips wie bei reinen Kontaktkarten hinter den Kontaktflächen zu montieren und serienmäßig herzustellen. Damit werden die Kosten für die Herstellung von Karten, welche kontaktfreie und kontaktbehaftete Eigenschaften kombinieren, gesenkt.

Des Weiteren weisen die erfindungsgemäßen Verfahren den Vorteil auf, dass die Teile Chipträgerelement A und Spulenträgerelement B in unterschiedlichen Herstellungsprozessen und zu unterschiedlichen Zeiten hergestellt werden können, wodurch es möglich ist, Kartenkörper, d.h. Plastikmaterialien unabhängig von der Chipmontage zu produzieren und Andrucke und Herstellung der Karten ohne Einbringung der Chips zu testen. Außerdem ist es möglich, Chips, wie bei reinen Kontaktkarten, hinter den Kontaktflächen zu montieren und serienmäßig herzustellen. Damit ist der Vorteil verbunden, dass die Teile A und B einschließlich ihrer späteren leitenden Verbindung, gebildet durch die elektrisch leitenden Materialien, die sich nach dem Zusammenfügen der Teile A und B zwischen ihnen befinden, separat mitsamt den elektrisch leitenden Materialien vor dem Zusammenfügen auf ihre elektrische Funktionsfähigkeit geprüft werden können, so dass die beiden Teile Chipträgerelement A und Spulenträgerelement B separat fertig gestellt werden können, um anschließend nur noch zusammengefügt zu werden.

Des Weiteren weist die Erfindung den Vorteil auf, dass die Spule oder Spulen des Spulenträgerelements B nicht mehr durchkontaktiert zu werden brauchen.

Die Menge oder Form der elektrisch leitenden Materialien kann auch genutzt werden, um unterschiedlich vorgegebene Abstände zwischen Chipträgerelement und ein Spulenträgerelement einzuhalten oder zu erzeugen. Die Materialien können wahlweise auf der Trägerfolie oder den elektrisch leitenden Flächen des Spulenträgerelementes aufgebracht werden. Das gewählte Verfahren kann den jeweiligen Produktionsbedürfnissen angepaßt werden.

Läßt sich das elektrisch leitende Material bei Erwärmung und/oder Druck während des Zusammenbringens von Chipträgerelement A und Spulenträgerelement B verformen, können Temperatur oder Druck oder eine andere Art der Energiezuführung zur Verformung den Abstand zwischen Chipträgerelement A und Spulenträgerelement B bestimmen. Das elektrisch leitende Material kann als klebende Verbindung zwischen Chipträgerelement A und Spulenträgerelement B genutzt werden, um ein ungewünschtes Auseinanderbringen der Teile nach der Montage zu erschweren. Damit wird die Sicherheit der Chipkarten gegenüber Herausmontieren der Chips erhöht.

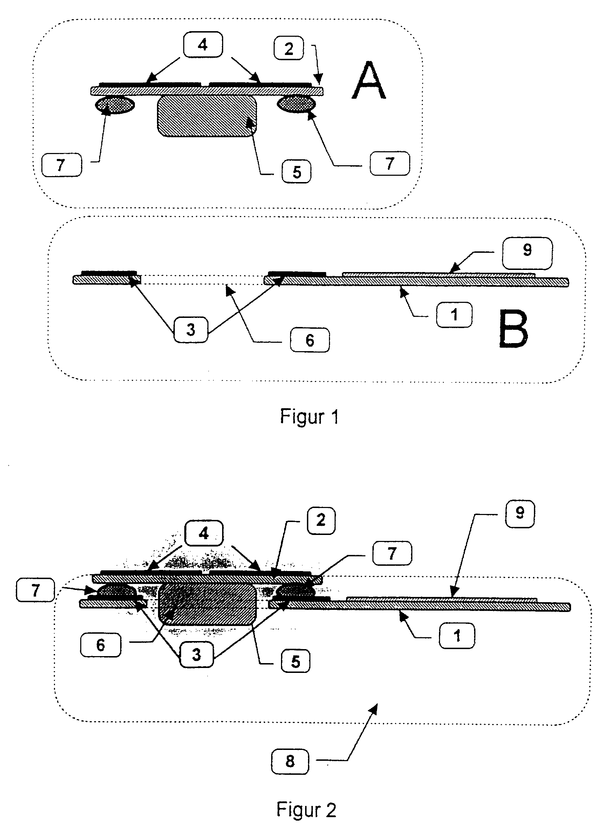

Fig. 1 zeigt schematisch die beiden Teile Chipträgerelement A und Spulenträgerelement B. Das Chipträgerelement A ist in seiner Form vergleichbar den heutigen Kontaktelementen, wie sie beispielsweise für Telefonkarten und auch für andere Chipkarten hergestellt werden. Das Chipträgerelement A enthält den Chip 5 auf der einen Seite eines Kontaktflächenträgerelementes 2. Die Kontaktflächen 4 sitzen auf der anderen Seite und stellen die Verbindung zu den Kontakten in Kartenendgeräten (Terminals) her. Zusätzlich sind elektrisch leitfähige Materialien 7 haftend an den Elementen 2 angebracht. Diese Materialien sind leitend mit Kontaktierstellen des Chips 5 verbunden.

Das Spulenträgerelement B zeigt schematisch die Folie 1, auf der eine oder mehrere Spulen 9 beispielsweise als gedruckte Leiterbahnen aufgebracht sind. Es ist das Loch 6 zu erkennen, welches beispielsweise durch eine Ausstanzung eingebracht ist. Ferner sind die Flächen 3 erkennbar, welche eine elektrische, galvanische Verbindung zu den Spulen 9 herstellen.

Fig. 2 zeigt schematisch die zusammengebrachten Teile Chipträgerelement A und Spulenträgerelement B. Es ist ersichtlich, dass der Chip 5 genau durch das Loch der Folie 1 paßt und somit ein Höhenunterschied zwischen Chip 5 und Abstand zwischen Kontaktflächenträgerelement 2 und Spulenträgerelement B ausgeglichen wird.

### Bevorzugte Ausführungsform der Erfindung:

Eine erfindungsgemäße Chipkarte enthält die beiden Teile Chipträgerelement A und Spulenträgerelement B. Damit werden Chipkarten beschrieben, welche sowohl Kontakte als auch Spulen zur kontaktfreien Übertragung von Energie und Daten (gemäß DE 39 35 364) nutzen. Chipträgerelement A soll in das Material 8 einer Chipkarte eingebettet werden. An diesem Chipträgerelement A sind ein oder mehrere Chips 5 unterhalb der Kontaktflächen 4 angebracht. Der/die Chips 5 sind mit den Kontaktflächen 4 elektrisch leitend gemäß herkömmlicher Verfahren, beispielsweise Bondung, verbunden. Zusätzlich sind erfindungsgemäß an den Kontaktflächenträgerelementen 2 elektrisch leitende Materialien 7 haftend angebracht. Diese Materialien stellen erfindungsgemäß elektrisch eine Verbindung zu den Verbindungsstellen der Chips her, an denen die Spulen zwecks kontaktfreier Energie und Dateneinkopplung (von einem externen Kartenendgerät) ihre Anschlüsse haben.

Das Spulenträgerelement B besteht aus einer (isolierenden) Trägerfolie 1, die auf einer beliebigen Seite Leiterbahnen in Form einer oder mehrerer Spulen 9 trägt. Außerdem sind auf der Folie 1 an den Stellen elektrisch leitende und mit den Spulen 9 verbundene Flächen 3 vorhanden, an denen auf dem Chipträgerelement A die leitenden Materialien 7 sitzen. Werden nun die Teile Chipträgerelement A und Spulenträgerelement B, welche in unterschiedlichen Herstellprozessen zu unterschiedlichen Zeiten hergestellt werden können, bei der Kartenherstellung zusammengebracht, verbinden die Materialien 7 elektrisch die Spulen 9 über die Kontaktflächenträgerelemente 2 mit den Eingängen des/der Chips 5. Nach dieser patentgemäßen Beschreibung ist es möglich, Kartenkörper, d.h. Plastikmaterialien 8 unabhängig von der Chipmontage zu produzieren und Andrucke und Herstellung der Karten ohne Einbringung der Chips zu testen. Außerdem ist es möglich, Chips, wie bei reinen Kontaktkarten, hinter den Kontaktflächen zu montieren und serienmäßig herzustellen. Damit werden die Kosten für die Herstellung von Karten, welche kontaktfreie und kontaktbehaftete Eigenschaften kombinieren, gesenkt.

Auf der Folie 1 befindet sich ein Loch 6 an der Stelle, an der auf dem Chipträgerelement A der Chip 5 sitzt. Ein möglicher Höhenunterschied zwischen Chip 5 und leitfähigem Material 7 kann beim Zusammenbringen der Teile Chipträgerelement A und Spulenträgerelement B ausgeglichen werden, indem der Chip 5 durch das Loch 6 geführt wird.

Die Materialien 7 können wahlweise auf der Folie 1 oder den Flächen 3 aufgebracht werden. Die gewählte Aufbringung kann den jeweiligen Produktionsbedürfnissen angepaßt werden.

Die Menge oder Form der Materialien 7 kann auch genutzt werden, um unterschiedlich vorgegebene Abstände zwischen Folie 1 und Kontaktflächenträgerelement 2 einzuhalten oder zu erzeugen.

Läßt sich das Material 7 bei Erwärmung und/oder Druck während des Zusammenbringens der Teile Chipträgerelement A und Spulenträgerelement B verformen, können Temperaturen oder Druck oder eine andere Art der Energiezuführung zur Verformung den Abstand zwischen Chipträgerelement A und Spulenträgerelement B bestimmen.

Das Material 7 kann als klebende Verbindung zwischen den Teilen Chipträgerelement A und Spulenträgerelement B genutzt werden, um ein unerwünschtes Auseinanderbringen der Teile nach der Montage zu erschweren. Damit wird die Sicherheit der Karten gegenüber Herausmontieren der Chips erhöht.

Das patentgemäße Zusammenbringen der beiden Teile Chipträgerelement A und Spulenträgerelement B kann auch von Vorteil sein, wenn das Chipträgerelement A keine Kontaktflächen enthält und mithin auch keine der bekannten Verbindungen zwischen Chip und Kontaktflächen und dem Chipträgerelement A vorhanden ist. In diesem Falle kann das Material 7 als Verbindungsmaterial für die Anbindung der Spulen verwendet werden. Ein zusätzlicher Prozeßschritt wie Löten oder Bonden ist nicht erforderlich.

## Patentansprüche

1. Chipkarte enthaltend die beiden Teile Chipträgerelement A und Spulenträgerelement B, wobei das Chipträgerelement A aus einem Kontaktflächenträgerelement (2) besteht, welches elektrisch mit mindestens einem elektronischen Chip (5) verbunden ist und von außen zugängliche Kontaktflächen (4) als Kartenkontakte aufweist zur Verbindung des Chips (5) mit Kontakten in einem Kartenendgerät, wobei der Chip (5) auf der den Kontaktflächen (4) abgewandten Seite des Chipträgerelements A angeordnet ist und das Spulenträgerelement B aus einer Trägerfolie (1) besteht, welche eine oder mehrere Spulen (9) trägt zur kontaktfreien Übertragung von Energie und Daten zu dem Kartenendgerät, dadurch gekennzeichnet,
- dass am Kontaktflächenträgerelement (2) auf der dem Spulenträgerelement B zugewandten Seite zusätzlich elektrisch leitende Materialien (7) haftend angebracht und elektrisch leitend mit dem Chip (5) verbunden sind,
- dass auf der Trägerfolie (1) an den Stellen elektrisch leitende und mit den Spulen (9) verbundene Flächen (3) vorhanden sind, an denen gegenüber auf dem Kontaktflächenträgerelement (2) die elektrisch leitenden Materialien (7) sitzen,
- so dass das mit dem Spulenträgerelement B zusammengebrachte Chipträgerelement A mittels der elektrisch leitenden Materialien (7) eine elektrische Verbindung zwischen den Spulen (9) und dem Chip (5) des Chipträgerelements A herstellt
- womit die Chipkarte sowohl als kontaktfreie Karte mit Hilfe der Spulenverbindungen wie wahlweise als kontaktbehaftete Karte mit Hilfe der Kontakte zu arbeiten imstande ist.

2. Chipkarte nach Anspruch 1, dadurch gekennzeichnet,
dass die Trägerfolie (1) ein Loch (6) an der Stelle enthält, an der auf dem Chipträgerelement (A) der Chip (5) sitzt.

3. Chipkarte nach Anspruch 1, dadurch gekennzeichnet,
dass die elektrisch leitenden Materialien (7) auf der Folie (1) und/oder den Flächen (3) aufgebracht sind.

4. Chipkarte nach Anspruch 1, dadurch gekennzeichnet,
dass die elektrisch leitenden Materialien (7) durch ihre Menge oder ihre Form zur Einhaltung eines Abstandes zwischen Folie (1) und Kontaktflächenträgerelement (2) nutzbar sind.

5. Chipkarte nach Anspruch 4, dadurch gekennzeichnet,
dass das elektrisch leitende Material (7) sich bei Erwärmung und/oder unter Druck während des Zusammenbringens von Chipträgerelement A und Spulenträgerelement B verformen läßt und damit der Abstand zwischen Chipträgerelement A und Spulenträgerelement B bestimmbar ist.

6. Chipkarte nach Anspruch 1, dadurch gekennzeichnet,
dass das elektrisch leitende Material (7) eine klebende Verbindung zwischen dem Chipträgerelement A und dem Spulenträgerelement B herstellt und somit ein Auseinanderbringen der beiden Teile nach der Montage erschwert.

7. Chipkarte enthaltend die beiden Teile Chipträgerelement A und Spulenträgerelement B, wobei das Chipträgerelement A elektrisch mit mindestens einem elektronischen Chip (5) verbunden ist und das Spulenträgerelement B aus einer Trägerfolie (1) besteht, welche eine oder mehrere Spulen (9) trägt zur kontaktfreien Übertragung von Energie und Daten zu einem Kartenendgerät, wobei der Chip (5) auf der dem Spulenträgerelement B zugewandten Seite des Chipträgerelements A angeordnet ist und am Chipträgerelement A auf der dem Spulenträgerelement B zugewandten Seite zusätzlich elektrisch leitende Materialien (7) haftend angebracht und elektrisch leitend mit dem Chip (5) verbunden sind, und auf der Trägerfolie (1) an den Stellen elektrisch leitende und mit den Spulen (9) verbundene Flächen (3) vorhanden sind, an denen gegenüber auf dem Chipträgerelement A die elektrisch leitenden Materialien (7) sitzen,
- so dass das mit dem Spulenträgerelement B zusammengebrachte Chipträgerelement A mittels der elektrisch leitenden Materialien (7) eine elektrische Verbindung zwischen den Spulen (9) und dem Chip (5) herstellt
- womit die Chipkarte als kontaktfreie Karte mit Hilfe der Spulenverbindungen zu arbeiten imstande ist.

8. Verfahren zur Herstellung von Chipkarten, die nach ihrer Fertigstellung im wesentlichen ein Chipträgerelement A und ein Spulenträgerelement B, enthalten, mit folgenden Schritten:
a) bereitstellendes Chipträgerelements A, das in das Kartenmaterial (8) der Chipkarte eingebettet werden soll, und welches Kontaktflächen (4) und unterhalb derselben wenigstens einen Chip (5) aufweist, der mit den Kontaktflächen (4) elektrisch leitend verbunden ist, und wobei am Chipträgerelement A elektrisch leitende Materialien (7) haftend angebracht sind, die elektrisch leitend mit Kontaktierstellen des Chips (5) verbunden sind, wobei später an den Stellen der elektrisch leitenden Materialien (7) sich gegenüber auf dem Teil B elektrisch leitende Flächen (3) befinden,
b) getrennt hiervon bereitstellendes Spulenträgerelements B, welches auf einer beliebigen Seite Leiterbahnen in Form einer oder mehrerer Spulen (9) trägt und bei dem die Flächen (3) elektrische, galvanische Verbindungen zu den Spulen (9) herstellen
c) zusammenbringen des Spulenträgerelements B und des Chipträgerelements A, welche in unterschiedlichen Herstellungsprozessen zu unterschiedlichen Zeiten hergestellt werden können, so, dass die elektrisch leitenden Materialien (7), die bereits elektrisch leitend mit dem Chip (5) verbunden sind, eine elektrisch leitende Verbindung zwischen den Spulen (9), dem Spulenträgerelement B und dem Chipträgerelement A und von diesen zum Chip (5) des Chipträgerelements A herstellen.

9. Verfahren zur Herstellung von Chipkarten, die nach ihrer Fertigstellung im wesentlichen ein Chipträgerelement A und ein Spulenträgerelement B enthalten, mit folgenden Schritten:
a) bereitstellendes Chipträgerelements A, das in das Kartenmaterial (8) der Chipkarte eingebettet werden soll, und welches Kontaktflächen (4) und unterhalb derselben wenigstens einen Chip (5) aufweist, der mit den Kontaktflächen (4) elektrisch leitend verbunden ist und wobei Kontaktierstellen des Chips (5) vorhanden sind,
b) getrennt hiervon bereitstellen des Spulenträgerelements B welches auf einer beliebigen Seite Leiterbahnen in Form einer oder mehrerer Spulen (9) trägt und dem Teil A zugewandte Flächen (3) aufweist, die elektrische, galvanische Verbindungen zu den Spulen (9) herstellen, wobei auf den Flächen (3) elektrisch leitende Materialien (7) haftend angebracht sind, die mit den Spulen (9) elektrisch leitend verbunden sind, und so daß später sich an den Stellen gegenöber den elektrisch leitenden Materialien (7) die Kontaktierstellen des Chips auf dem Chipträgerelement A befinden,
c) zusammenbringen des Spulenträgerelements B und des Chipträgerelements A, welche in unterschiedlichen Herstellungsprozessen zu unterschiedlichen Zeiten hergestellt werden können, so, dass die elektrisch leitenden Materialien (7), die bereits elektrisch leitend mit den Spulen (9) verbunden sind, eine elektrisch leitende Verbindung zwischen den Spulen (9), dem Spulenträgerelements B und dem Chipträgerelement A und von diesen zum Chip (5) des Chipträgerelements A herstellen.

## Claims

1. Chip card containing two parts, namely, chip carrier element A and coil carrier element B, whereby the chip carrier element A consists of a contact surface carrier element (2) which is electrically connected to at least one electronic chip (5), and having contact surfaces (4) that are accessible from the outside as the card contacts for purposes of connecting the chip (5) with contacts in a card terminal, whereby the chip (5) is located on the side of the chip carrier element A facing away from the contact surfaces (4) and the coil carrier element B consists of a carrier film (1) which has one or more coils (9) for contact-free transmission of energy and data to the card terminal, characterized in that,
• electrically conductive materials (7) are additionally adhered to the side of the contact surface carrier element (2) facing the coil carrier element B and are connected to chip (5) in an electrically conductive manner,
• in that on the carrier film (1), there are surfaces (3) that are electrically conductive and are connected to the coils (9) at the sites across from which the electrically conductive materials (7) are situated on the contact surface carrier element (2),
• so that the chip carrier element A that is brought into contact with the coil carrier element B creates an electric connection between the coils (9) and the chip (5) of the chip carrier element A by means of the electrically conductive materials (7),
• as a result of which the chip card is capable of functioning as a contact-free card using the coil connections as well as alternatively as a contact card using the contacts.

2. Chip card according to Claim 1, characterized in that
the carrier film (1) has a hole (6) at the site where the chip (5) is located on the chip carrier element A.

3. Chip card according to Claim 1, characterized in that
the electrically conductive materials (7) are applied onto the film (1) and/or onto the surfaces (3).

4. Chip card according to Claim 1, characterized in that
due to their quantity or shape, the electrically conductive materials (7) can be used to maintain a certain distance between the film (1) and the contact surface carrier element (2).

5. Chip card according to Claim 4, characterized in that
the electrically conductive material (7) is deformed when it is heated up and/or under pressure when the chip carrier element A and the coil carrier element B are brought into contact, as a consequence of which the distance between the chip carrier element A and the coil carrier element B can be determined.

6. Chip card according to Claim 1, characterized in that
the electrically conductive material (7) creates an adhesive connection between the chip carrier element A and the coil carrier element B, thus making it difficult to separate the two parts after the assembly.

7. Chip card containing two parts, namely, chip carrier element A and coil carrier element B, whereby the chip carrier element A is electrically connected to at least one electronic chip (5) and the coil carrier element B consists of a carrier film (1) which has one or more coils (9) for contact-free transmission of energy and data to a card terminal, whereby the chip (5) is located on the side of the chip carrier element A facing the coil carrier element B and electrically conductive materials (7) are additionally adhered to the side of the chip carrier element A facing the coil carrier element B and are connected to chip (5) in an electrically conductive manner and, on the carrier film (1), there are surfaces (3) that are electrically conductive and are connected to the coils (9) at the sites across from which the electrically conductive materials (7) are situated on the chip carrier element A,
• so that the chip carrier element A that is brought into contact with the coil carrier element B creates an electric connection between the coils (9) and the chip (5) by means of the electrically conductive materials (7),
• as a result of which the chip card is capable of functioning as a contact-free card using the coil connections.

8. Process for the production of chip cards which, after their production, contain essentially a chip carrier element A and a coil carrier element B, with the following steps:
a) creating the chip carrier element A that is to be embedded in the card material (8) of the chip card and that has contact surfaces (4) and, below said surfaces, at least one chip (5) which is connected to the contact surfaces (4) in an electrically conductive manner, and whereby electrically conductive materials (7) are adhered to the chip carrier element A which are connected to contact sites of the chip (5) in an electrically conductive manner, whereby later, there are conductive surfaces (3) located on part B across from the sites of the electrically conductive materials (7),
b) separate from this, creating the coil carrier element B which has conducting tracks in the form of one or more coils (9) on either side and whereby the surfaces (3) establish electric, galvanic connections to the coils (9),
c) combining the coil carrier element B and the chip carrier element A, which can be made at different times in different manufacturing processes, so that the electrically conductive materials (7), which are already connected to the chip (5) in an electrically conductive manner, create an electrically conductive connection between the coils (9), the coil carrier element B and the chip carrier element A, and from these to the chip (5) of the chip carrier element A.

9. Process for the production of chip cards which, after their manufacture, contain essentially a chip carrier element A and a coil carrier element B, with the following steps:
a) creating the chip carrier element A that is to be embedded in the card material (8) of the chip card and that has contact surfaces (4) and, below said surfaces, at least one chip (5) which is connected to the contact surfaces (4) in an electrically conductive manner, and whereby contact sites of the chip (5) are present,
b) separate from this, creating the coil carrier element B which has conducting tracks in the form of one or more coils (9) on either side and surfaces (3) facing part A, which establish electric, galvanic connections to the coils (9), whereby electrically conductive materials (7) are adhered to the surfaces (3) which are connected to the coils (9) in an electrically conductive manner so that later, the contact sites of the chip are located on the chip carrier element A at the sites across from the electrically conductive materials (7),
c) combining the coil carrier element B and the chip carrier element A, which can be made at different times in different manufacturing processes, so that the electrically conductive materials (7), which are already connected to the coils (9) in an electrically conductive manner, create an electrically conductive connection between the coils (9), the coil carrier element B and the chip carrier element A, and from these to the chip (5) of the chip carrier element A.

## Revendications

1. Carte à puce, comprenant les deux pièces élément-support de puce A et élément-support de bobine B, l'élément-support de puce A consistant en un élément-support de surfaces de contact (2) connecté électriquement à au moins une puce électronique (5) et présentant des surfaces de contact (4) accessibles de l'extérieur qui sont les contacts de la carte et servent à établir la connexion entre la puce (5) et les contacts à l'intérieur d'un lecteur de cartes, la puce (5) étant disposée sur la face de l'élément-support de puce A opposée aux surfaces de contact (4) et l'élément-support de bobine B consistant en une pellicule-support (1) qui porte une ou plusieurs bobines (9) pour la transmission sans contact d'énergie et de données au lecteur de cartes, caractérisée en ce que
- de plus, des matières conductrices (7) sont appliquées par adhésion sur la face de l'élément-support des surfaces de contact (2) tournée vers l'élément-support de bobine B, et connectées électriquement à la puce (5),
- que des surfaces (3) conductrices et connectées aux bobines (9) sont disposées sur la pellicule-support (1) en face des matières conductrices (7) appliquées sur l'élément-support des surfaces de contact (2), en correspondance avec ces-dernières,
- si bien que l'élément-support de puce A, lorsqu'il est assemblé avec l'élément-support de bobine B, établit, par l'intermédiaire des matières conductrices (7), une connexion électrique entre les bobines (9) et la puce (5) de l'élément-support de puce A,
- la carte à puce pouvant ainsi fonctionner au choix soit comme carte sans contact à l'aide des connexions par bobines, soit comme carte avec contact à l'aide des contacts.

2. Carte à puce selon la revendication 1, caractérisée en ce que
la pellicule-support (1) présente un trou (6) dans l'endroit correspondant à l'emplacement de la puce (5) sur l'élément-support de puce A.

3. Carte à puce selon la revendication 1, caractérisée en ce que
les matières conductrices (7) sont appliquées sur la pellicule (1) et/ou sur les surfaces (3).

4. Carte à puce selon la revendication 1, caractérisée en ce que
les matières conductrices (7), de par leur quantité ou leur forme, peuvent être utilisées pour maintenir un écart entre la pellicule (1) et l'élément-support des surfaces de contact (2).

5. Carte à puce selon la revendication 4, caractérisée en ce que,
lors de l'assemblage de l'élément-support de puce A et de l'élément-support de bobine B, la matière conductrice (7) est déformable par chauffage et/ou sous pression permettant ainsi de déterminer l'écart entre l'élément-support de puce A et l'élément-support de bobine B.

6. Carte à puce selon la revendication 1, caractérisée en ce que
la matière conductrice (7) réalise une jonction par adhésion entre l'élément-support de puce A et l'élément-support de bobine B rendant ainsi difficile la séparation des deux pièces une fois assemblées.

7. Carte à puce comprenant les deux pièces élément-support de puce A et élément-support de bobine B, l'élément-support de puce A étant connecté électriquement à au moins une puce électronique (5) et l'élément-support de bobine B consistant en une pellicule-support (1) qui porte une ou plusieurs bobines (9) pour la transmission sans contact d'énergie et de données à un lecteur de cartes, carte à puce dans laquelle la puce (5) est disposée sur la face de l'élément-support de puce A tournée vers l'élément-support de bobine B et, de plus, des matières conductrices (7) sont appliquées par adhésion sur la face de l'élément-support de puce A tournée vers l'élément-support de bobine B et connectées électriquement à la puce (5), la pellicule-support (1) présentant des surfaces conductrices (3) reliées aux bobines (9) et situées en face des matières conductrices (7) appliquées sur l'élément-support de puce A, en correspondance avec ces-dernières,
- si bien que l'élément-support de puce A, lorsqu'il est assemblé avec l'élément-support de bobine B, établit, par l'intermédiaire des matières conductrices (7), une connexion électrique entre les bobines (9) et la puce (5),
- permettant ainsi à la carte à puce de fonctionner comme carte sans contact à l'aide des connexions par bobine.

8. Procédé pour la préparation de cartes à puce qui, une fois achevées, comportent pour l'essentiel une élément-support de puce A et un élément-support de bobine B, comprenant les étapes suivantes:
a) mise à disposition de l'élément-support de puce A devant être incorporé dans le matériau (8) de la carte à puce et présentant des surfaces de contact (4) et au-dessous de celles-ci au moins une puce (5), qui est reliée de façon électroconductrice aux surfaces de contact (4), des matières conductrices (7) étant appliquées par adhésion sur l'élement-support de puce A qui sont reliées de façon conductrice à des bornes de la puce (5), et en face desquelles se trouveront plus tard les surfaces conductrices (3) de la pièce B,
b) mise à disposition séparément de l'élément-support de bobine B qui porte sur une face quelconque des pistes conductrices sous forme d'une ou de plusieurs bobines (9) et dans lequel les surfaces (3) établissent des connexions électriques galvaniques aux bobines (9),
c) assemblage de l'élément-support de bobine B et de l'élément-support de puce A, les deux éléments pouvant être réalisés par différents processus de fabrication à des temps différents, de sorte que les matières conductrices (7) déjà connectées à la puce (5) établissent une connexion électroconductrice entre les bobines (9) de l'élément-support de bobine B et l'élément-support de puce A et, à partir de ce dernier, à la puce (5) de l'élément-support de puce A.

9. Procédé pour la préparation de cartes à puce qui, une fois achevées, comportent pour l'essentiel un élément-support de puce A et un élément-support de bobine B, comprenant les étapes suivantes:
a) mise à disposition de l'élément-support de puce A devant être incorporé dans le matériau (8) de la carte à puce et présentant des surfaces de contact (4) et au-dessous de celles-ci au moins une puce (5), qui est reliée de façon électroconductrice aux surfaces de contact (4), ladite puce étant dotée de points de mise en contact,
b) mise à disposition séparément de l'élément-support de bobine B qui porte sur une face quelconque des pistes conductrices sous forme d'une ou de plusieurs bobines (9) ainsi que des surfaces (3) tournées vers la pièce A qui établissent des connexions électriques galvaniques avec les bobines (9), des matières conductrices (7) étant appliquées par adhésion sur les surfaces (3) et reliées de façon électroconductrice aux bobines (9), de sorte que, par la suite, les points de mise en contact de la puce sur l'élément-support de puce A se trouvent en face des matières conductrices (7), en correspondance avec celles-ci,
c) assemblage de l'élément-support de bobine B et de l'élément-support de puce A, les deux éléments pouvant être réalisé par différents processus de fabrication à des temps différents, de sorte que les matières conductrices (7), déjà connectées aux bobines (9), établissent une connexion électroconductrice entre les bobines (9) de l'élément-support de bobine B et l'élément-support de puce A et, à partir de ce dernier, à la puce (5) de l'élément-support de puce A.
